# EUROPEAN PATENT APPLICATION

(11) **EP 3 305 564 A1**
(43) Date of publication of application: **11.04.2018**
(21) Application number: 16192236.4
(22) Date of filing: 04.10.2016
(51) Int. Cl.: B60H 1/00, G02B 27/01

(54) **HEAD UP DISPLAY SYSTEM**

(71) Applicant: Volvo Car Corporation, 40 531 Göteborg (SE)
(72) Inventor: Willerup, Mathias, 2830 Virum (DK); Liu, Yuchu, 2450 København (DK)
(74) Representative: Volvo Car Corporation

(57) **Abstract**

The present invention relates to a combined ventilation duct and head up display system (100) for a vehicle (200), comprising: an electronic image emitting unit (106) arranged to emit an optical image signal (112) through at least a portion of said duct along; a first optically reflective surface (108); and a concave optically reflecting surface (110); wherein, said electronic image emitting unit is arranged to emit said optical image signal towards said first optically reflective surface in said duct, said first optically reflecting surface is arranged such that the optical image signal is reflected at a first angle (α) with respect to said first axis towards said concave optically reflecting surface arranged to reflect the optical image signal towards an optical projection element (202) such that an image representative of said optical image signal is visible through said optical projection element.

## Description

### Field of the Invention

The present invention relates to a combined ventilation duct and head up display system for a vehicle. The invention further relates to a method for installing a head up display system in a ventilation duct of a vehicle.

### Background of the Invention

Head up displays is a type of display which allows a user to read information on the display without having to look away from a previous viewpoint. Furthermore, head up displays are optimally designed so that the user should not have to refocus with the eyes when changing viewpoint from looking at the displayed information to a viewpoint behind the displayed information. For example, if the head up display is arranged in a car, the driver should preferably be able to switch between looking at the displayed information and the road without having to refocus with the eyes.

Head up displays are characterized by their field of view and projection distance. A large projection distance is desirable because it reduces the need for the user to refocus with the eyes when switching between watching the road and watching the displayed information, since the displayed information gets "closer" to the normal viewpoint (i.e. the road) for the user. A large field of view provides a broader view with a possibility of displaying more information.

One approach for increasing the field of view is disclosed in US2012/0127381 in which there is described a multiple channel head up display. Each channel produces a fraction of the total image which is a collimated combination of the fractional images. Furthermore, each channel requires its own optical components such as lenses, mirrors, and a LCD-projector, thus resulting in a relatively bulky and expensive head up display. Furthermore, the number of channels will be limited by the available space for the head up display where it is to be installed (e.g. in a vehicle).

Generally, in order to enlarge the field of view and/or the projection distance, the optical paths of the system has to become longer. However, in many application areas such as in the automotive industry, the optical components such as LCD screen and mirrors, and the desired optical path require substantial space and this therefore becomes a limitation to the head up system performance.

Accordingly, there is room for improvements with regards to integrating head up display systems in vehicles.

### Summary

In view of above-mentioned prior art, it is an object of the present invention to provide a combined ventilation duct and head up display system that alleviates at least some of the above mentioned drawbacks of the prior art level indicators.

According to a first aspect of the invention, there is provided a combined ventilation duct and head up display system for a vehicle, the duct extending along a first axis, the system comprising: an electronic image emitting unit arranged to emit an optical image signal such that the optical image signal travels through at least a portion of the duct along the first axis; a first optically reflective surface; and a concave optically reflecting surface; wherein, when in use, the electronic image emitting unit is arranged to emit the optical image signal towards the first optically reflective surface along an optical path in the duct substantially parallel with the first axis, the first optically reflecting surface is arranged such that the optical image signal is reflected at a first angle with respect to the first axis towards the concave optically reflecting surface, wherein the concave optically reflecting surface is arranged to reflect the optical image signal received from the first optically reflecting surface towards an optical projection element such that an image representative of the optical image signal is visible through the optical projection element.

The present invention is based on the realization that there is existing space available in the ventilation ducts of a vehicle in which the optical signals generated in a head display system may travel. Generally, from magnification and focal point considerations, a larger distance between the image source (e.g. the electronic image emitting unit) and the concave optically reflecting surface provides a larger distance from the optical projection element to the virtual image, thus a larger projection distance is obtained. Therefore, from optics considerations, in order to enlarge the projection distance and field of view the size of the head up display system (the size related to the length of the optical paths) grows, it was thus realized that it is possible to combine the ventilation duct system with the head up display system by allowing optical paths for the head up display to lie within the ventilation duct. This way, the optical paths of the head up display can be made longer thereby increasing the projection distance without needing additional hardware such as large housings for the components of the head up display since they can be integrated with the ventilation duct system of the vehicle.

The optical path is the path from the electronic image emitting unit to the concave optically reflective surface.

The optically reflecting surfaces are preferably optically specular, for example the optically reflecting surfaces may be mirror-like.

The first optically reflecting surface may be part of a first optically reflecting element and the concave optically reflecting surface may be part of a second optically reflecting element. Alternatively, first optically reflecting surface and the concave optically reflecting surface may both be part of a single optically reflecting element. An optically reflecting element may be a mirror comprising the respective optically reflecting surface(s).

It should be noted that not necessarily the entire optical image signal is reflected, thus losses in the reflection or part diffusive optical reflection may be allowable.

The first angle with respect to the first axis will depend on the locations of the first optically reflective surface, the concave optically reflective surface, and the electronic image emitting unit. The first angle is configured such that the optical image signal is reflected by the first optically reflected surface towards the concave optically reflective surface.

The term "substantially parallel" should be interpreted as that a small deviation from parallel is allowable and within the scope of the claims. A deviation is allowable as long as the optical image signal emitted from the electronic image emitting unit is reflected by the first optically reflected surface towards the concave optically reflective surface. It should be noticed that the optical path lies at least partly within the duct which extends along the first axis, the optical path lies such that the optical image signal can travel uninterrupted in the duct before it is reflected by e.g. the first optically reflecting surface.

The electronic image emitting unit is configured to emit an optical image signal with the image content which is to be displayed through the optical projection image. For example, the electronic image emitting unit is configured to "display" an image which may be reflected by the optically reflecting surfaces and finally shown through the optical projection image. Furthermore, the electronic image emitting unit may comprise its own control unit or may be controlled by a host control unit for generating the images which are to be emitted as the optical image signal. For example, such images may comprise road data, speed, maps, directions, entertainment data (radio stations, play lists, etc).

According to one embodiment of the invention, the first axis may be substantially parallel with an axis along a width of the vehicle. The width of the vehicle may be taken along an axis substantially orthogonal to a driving direction of the vehicle. For example, the width may be taken along an axis parallel with an axis through a pair of front wheels of a car, truck, train or similar. Additionally or alternatively, the first axis may be substantially horizontal.

The term "substantially horizontal" should be interpreted as that a small deviation from horizontal is allowable and within the scope of the claims. Horizontal should be interpreted with respect to the plane of the vehicle contact surface with the ground when standing on a planar surface.

Having the first axis substantially parallel with an axis along a width of the vehicle, or in the horizontal configuration, is particularly advantageous for cars and trucks in which ventilation ducts typically run in this direction in the instrument panel. Thus, the ventilation ducts enable a particularly advantageous integration location for the head up display with increased optical path lengths.

The ventilation duct may comprise an air inlet and an air outlet, whereby a flow of air can travel from the inlet to the outlet wherein the electronic image emitting unit is arranged in the air flow path. Thereby, the electronic image emitting unit may be air cooled by the air flowing through the ventilation duct. This reduces or even eliminates the need for additional cooling equipment for the head up display system, and thus further improves the integration of the ventilation duct and the head up display system.

In one embodiment, the electronic image emitting unit is arranged outside the duct and configured to emit the optical image signal into the duct. For example, side walls of the ventilation duct may be at least partly optically transmissive (e.g. transparent or semi-transparent) such that the optical image signal can enter the ventilation duct through e.g. optically transmissive windows in the side walls. Additionally or alternatively, there may be a through-hole in the side walls of the ventilation duct through which the optical image signal can be transmitted. With the electronic image emitting unit arranged outside the ventilation duct, maintenance, service, or replacement of the electronic image emitting unit is facilitated since it may be easily accessible. For example it may be accessible through an opening in a storage compartment of the instrument panel of a vehicle.

In another embodiment, the electronic image emitting unit and first optically reflective surface may be arranged inside the duct which makes the combined ventilation duct and head up display system more compact.

The electronic image emitting unit may be arranged at a first end portion of the duct and the first optically reflective surface is arranged at a second end portion of the ventilation duct. Thus, in order to fully utilize the size of the ventilation duct to thereby improve the performance (e.g. projection distance) of the head up display, the electronic image emitting unit and the first optically reflective surface may be arranged at opposite end portions of the ventilation duct.

The optical projection element may be a windshield of the vehicle or a combiner. The combiner may be a separate combiner display (e.g. a flat or curved piece of glass) arrangable in the eyesight of the user.

The ventilation duct may for example be part of an instrument panel in a vehicle, thus the combined ventilation duct and head up display system may be integrated in the instrument panel of a vehicle.

According to a second aspect of the invention, there is provided a method for installing a head up display system in a ventilation duct of a vehicle, the duct extending along a first axis, the head up display system comprising: an electronic image emitting unit configured to emit an optical image signal; a first optically reflective surface; and a concave optically reflecting surface; wherein the method comprises the steps of: arranging the electronic image emitting unit such that the optical image signal travels through at least a portion of the ventilation duct; arranging the first optically reflective surface in the duct such that the optical image signal is received by the first optically reflective surface and is reflected at a first angle with respect to the first axis; arranging the concave optically reflecting surface to receive the optical image signal from the first optically reflective surface and to reflect the optical image signal towards an optical projection element such that an image representative of the optical image signal is visible through the optical projection element.

The electronic image emitting unit and the first optically reflecting surface may be rigidly attached such that the optical paths are stable. The concave optically reflecting surface may be rotatable such that the image representative of the optical image signal which is visible through the optical projection element is movable in the viewpoint of the user.

According to one embodiment of the invention, the electronic image emitting unit may be arranged outside the duct and configured to emit the optical image signal into the duct.

Alternatively, the electronic image emitting unit may be arranged inside the duct.

Effects and features of the second aspect of the invention are largely analogous to those described above in connection with the first aspect of the invention.

According to a third aspect of the invention there is provided a vehicle comprising the combined ventilation duct and head up display system according to any one of the aspects and embodiments.

Effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig 1 schematically illustrates a combined ventilation duct and head up display system according to an example embodiment of the invention;
Fig. 2a-b each schematically illustrate an example application for a combined ventilation duct and head up display system according to an example embodiment of the invention;
Fig. 3 schematically illustrates a combined ventilation duct and head up display system according to an example embodiment of the invention; and
Fig. 4 shows a flow-chart with method steps according to an embodiment of the invention.

### Detailed Description of Example Embodiments

In the present detailed description, various embodiments of the system and method according to the present invention are mainly described with reference to integration in a vehicle in the form of a car. However, the present invention may equally be used for any other type of vehicle such as a truck, a train, an airplane, bus, boat, etc. Thus, this invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

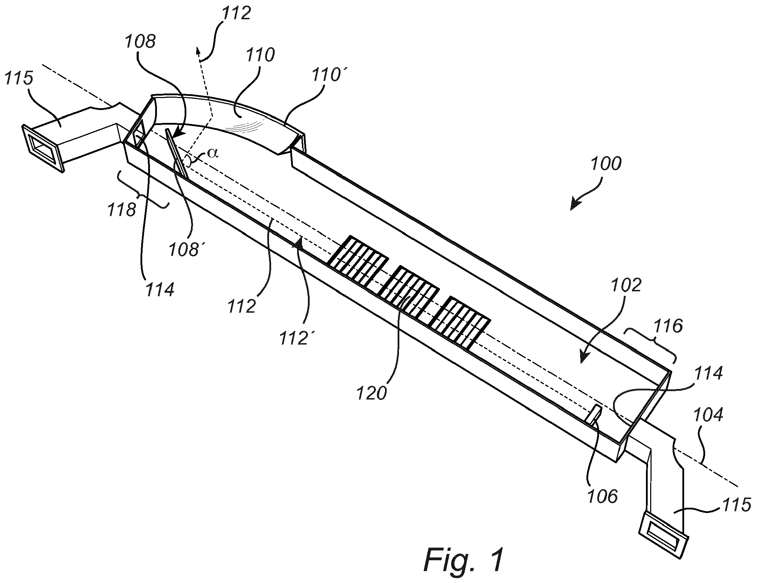

Fig. 1 shows an embodiment of a combined ventilation duct and head up display system 100 according to the invention. The ventilation duct 102 extends along a first axis 104 from a first end portion 116 to a second end portion 118. In this embodiment, an electronic image emitting unit 106 is arranged inside the ventilation duct 102. The electronic image emitting unit 106 may for example be a liquid crystal display (LCD) unit for example of thin-film transistor (FTF) type with a suitable size. With further reference to Fig. 1 there is shown a first optically reflective surface 108 as part of a first optical element 108' which may be a mirror, and a concave optically reflecting surface 110 as part of a concave optically reflecting element 110', this may be a concave mirror 110'. The electronic image emitting unit 106 may be connected to a control unit (not shown) or comprises its own control unit for generation of the images which are emitted as an optical image signal by the electronic image emitting unit 106. The optical image signal 112 is emitted through the ventilation duct 102 along an optical path 112' substantially parallel with the first axis 104. In this embodiment, the first optically reflective surface 108 is arranged in the ventilation duct 102. The first optically reflecting surface 108 is arranged such that the optical image signal 112 is reflected by the first optically reflecting surface 108 at an angle α with respect to the first axis (or with respect to an axis parallel with the first axis) towards the concave optically reflecting surface 110. The angle α may for example be selected from the range of 25º - 55º depending on the location of the first optically reflecting surface 108 and the concave optically reflecting surface 110. The optical path 112' extends from the electronic image emitting unit 106 to the concave optically reflecting surface via the first reflecting surface 108.

In the embodiment shown in Fig. 1, the concave optically reflecting surface 110 is arranged outside the ventilation duct 102, however, in other embodiments the concave optically reflecting surface 110 may be arranged inside the ventilation duct 102 and reflect the optical image signal out from the ventilation duct 102 through a through-hole. Here, the first optically reflecting surface 108 reflects the optical image signal 112 out from the ventilation duct thought a though-hole or transparent window (not shown) in the ventilation duct 102. The concave optically reflecting surface 110 is arranged to reflect the optical image signal 112 towards an optical projection element (not shown) such as a windscreen or a combiner. The concave optically reflecting surface 110 is configured to refocus and magnify the virtual image to be projected by the e.g. windscreen as is known in the art.

With further reference to Fig. 1, the electronic image emitting unit 106 may require cooling, thus here the electronic image emitting unit 106 is arranged in an air flow path between an air inlet 120 and an air outlet 114 of the ventilation duct. This way, the electronic image emitting unit 106 will be cooled by air flowing from the air inlet 120 through the ventilation duct 102 and out through the air outlet 114.

In order to fully utilize the length of the ventilation duct, the electronic image emitting unit 106 is arranged at the first end portion 116 of the duct and the first optically reflective surface 108 is arranged at the second end portion 118 of the duct. The first end portion 116 and the second end portion 118 are at opposite ends of the ventilation duct 102. As an example, the length of the ventilation duct may be in the range of 0.1 m - 1.5 m, such as for example, 0.2 m, 0.3 m, 0.4 m, 0.6 m, 0.8 m, 1 m, or 1.3 m. The longer the distance of the optical path, the larger the projection distance may be, thus it is of interest to place the electronic image emitting unit 106 and the first optically reflective surface 108 far from each other.

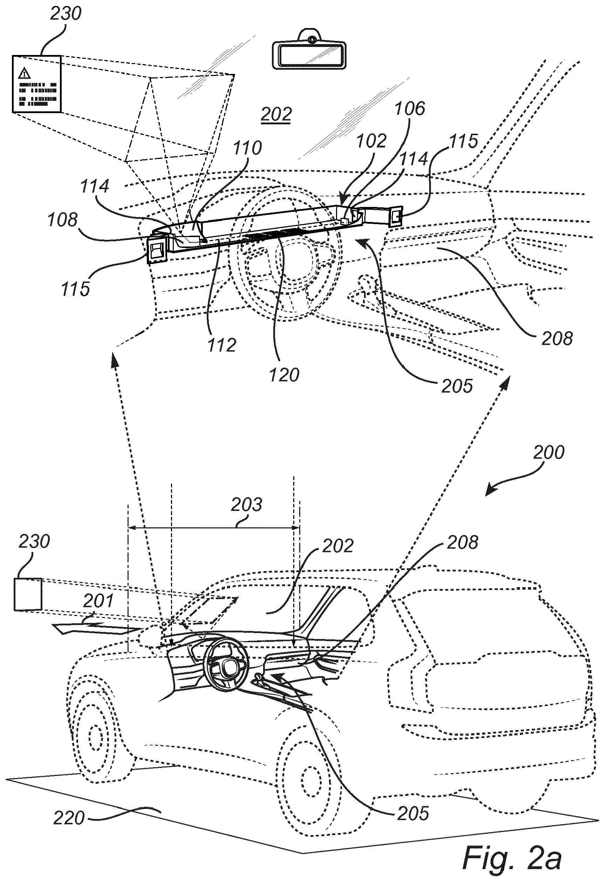

Fig. 2a schematically illustrates an embodiment of the invention in the form of a vehicle comprising the combined ventilation duct and head up display system 100 shown in Fig. 1. Here, the vehicle is shown in the form of a car 200. As is shown in Fig. 2a, the combined ventilation duct and head up display system 100 is integrated in the instrument panel 205 of the vehicle 200. The ventilation duct 102 may be part of the HVAC (heating, ventilation, and air conditioning) system of the vehicle. However, the combined ventilation duct and head up display system 100 may be located in other parts of the HVAC system, thus not necessarily in the instrument panel 205 of the vehicle 200. Any ventilation duct in the vehicle may be suitable for combining with a head up display system. As shown in Fig. 2a, the ventilation duct is arranged such that the first axis 104 (see fig. 1) of the ventilation duct 102 is substantially parallel with a width 203 of the vehicle 200 and substantially orthogonal with a driving direction 201 of the vehicle 200. Optional air outlet extensions 115 connected to the air outlets 114 are arranged to allow air to enter the vehicle. In Fig. 2a there is further shown a windscreen 202 of the vehicle 200 onto which the optical image signal 112 may be reflected by the concave optically reflective surface 110. The driver may see the projected image 230 projected at infinity (e.g. 5-15 meters in from of the vehicle). With further reference to Fig. 2a, the ventilation duct is here arranged in a substantially horizontal orientation, e.g. parallel with the ground 220.

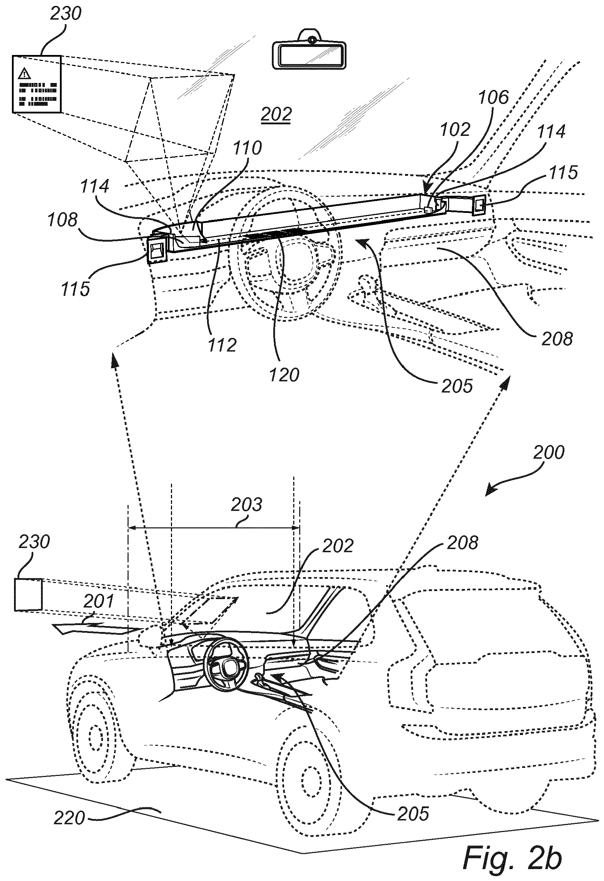

Fig. 2b schematically illustrates another embodiment of the invention. The difference between the embodiment shown in Fig. 2b and the embodiment described with reference to Fig. 2a is that the ventilation duct 102 extends across the entire dashboard 205 of the car 200. In this way, the ventilation duct 102 is longer compared to the embodiment shown in Fig. 2a. Consequently, the optical path 112' can be made longer since the electronic image emitting unit and the first optically reflecting surface may be placed on opposite ends of the ventilation duct 102. Thereby, the performance of the head up display system can be further improved.

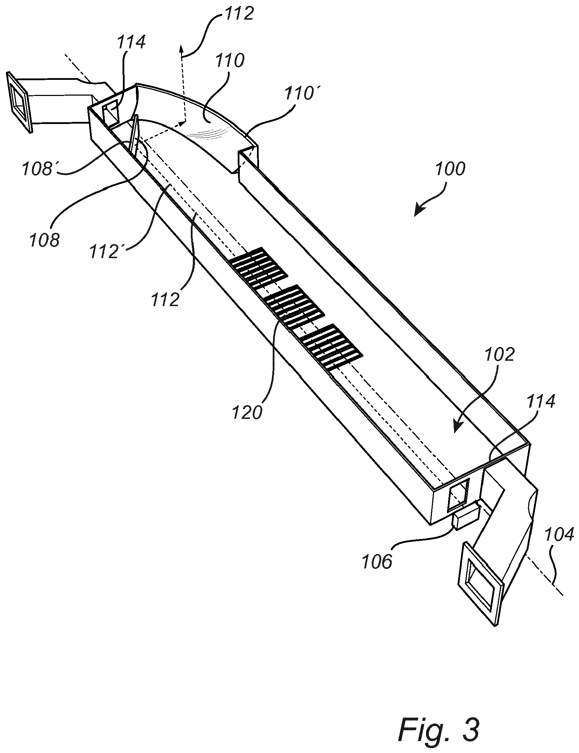

Fig. 3 illustrates another embodiment of a combined ventilation duct and head up display system 300. The difference between this embodiment and the embodiment in Fig. 1 is that the electronic image emitting unit 106 is arranged outside the ventilation duct 102 and is configured to emit the optical image signal into the duct 102. The optical image signal may be emitted through a hole or a transparent (or semitransparent) window 305 in the wall 306 of the ventilation duct 102. In this embodiment, when the electronic image emitting unit 106 is arranged close the e.g. the glove compartment 208 (see Fig. 2) of the vehicle, it may easily be accessible e.g. though an opening (not shown) in the glove compartment 208. This may be advantageous for facilitated access for maintenance and service or replacement of the electronic image emitting unit 106. Even when arranged outside the ventilation duct 102, the electronic image emitting unit 106 may utilize the air cooling from the ventilation duct by placing the electronic image emitting unit 106 close to the air outlet 114.

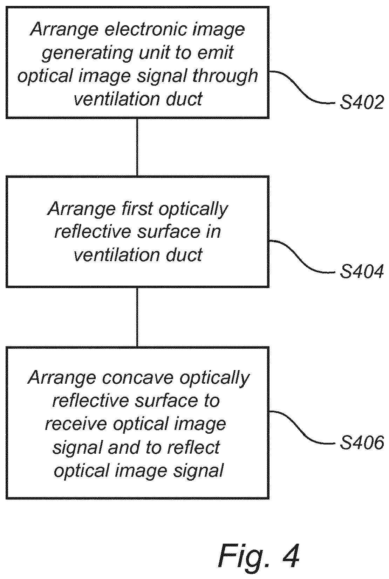

Fig. 4 illustrates a flow-chart of method steps according to an embodiment of the invention. In a first step S402, an electronic image emitting unit is arranged such that the optical image signal travels through at least a portion of the ventilation duct. Subsequently, in step S404 the first optically reflective surface is arranged in the duct in a configuration such that the optical image signal is received by the first optically reflective surface and is reflected at a first angle with respect to the first axis. In step S406, the concave optically reflecting surface is arranged to receive the optical image signal from the first optically reflective surface and to reflect the optical image signal towards an optical projection element such that an image representative of the optical image signal is visible through the optical projection element.

It should be noted that he method steps may be performed in another order than what is depicted here. Thus the particular order described herein should not be considered limiting to the scope of the invention.

The control unit may include a microprocessor, microcontroller, programmable digital signal processor or another programmable device. The control unit may be part of the electronic image emitting unit or may be a host control unit such as a control unit of the vehicle.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. Combined ventilation duct and head up display system (100) for a vehicle (200), said duct extending along a first axis (104), said system comprising:
- an electronic image emitting unit (106) arranged to emit an optical image signal (112) such that the optical image signal travels through at least a portion of said duct along said first axis;
- a first optically reflective surface (108); and
- a concave optically reflecting surface (110); wherein, when in use,
said electronic image emitting unit is arranged to emit said optical image signal towards said first optically reflective surface along an optical path in said duct substantially parallel with said first axis,
said first optically reflecting surface is arranged such that the optical image signal is reflected at a first angle (α) with respect to said first axis towards said concave optically reflecting surface, wherein
said concave optically reflecting surface is arranged to reflect the optical image signal received from the first optically reflecting surface towards an optical projection element such that an image representative of said optical image signal is visible through said optical projection element (202).

2. The combined ventilation duct and head up display system according to claim 1, wherein said first axis is substantially parallel with an axis along a width (203) of the vehicle.

3. The combined ventilation duct and head up display system according to any one of the preceding claims, wherein ventilation duct comprises an air inlet (120) and an air outlet (114), whereby a flow of air can travel from the inlet to the outlet wherein said electronic image emitting unit is arranged in the air flow path.

4. The combined ventilation duct and head up display system according to any one of the preceding claims, wherein said electronic image emitting unit is arranged outside said duct and configured to emit said optical image signal into said duct.

5. The combined ventilation duct and head up display system according to any one claim 1 to 3, wherein said electronic image emitting unit and first optically reflective surface are arranged inside said ventilation duct.

6. The combined ventilation duct and head up display system according to any one of the preceding claims, wherein said electronic image emitting unit is arranged at a first end portion (116) of said duct and said first optically reflective surface is arranged at a second end portion (118) of said duct.

7. The combined ventilation duct and head up display system according to any one of the preceding claims, wherein said first axis is substantially horizontal.

8. The combined ventilation duct and head up display system according to any one of the preceding claims, wherein said optical projection element is a windshield (202) of said vehicle or a combiner.

9. The combined ventilation duct and head up display system according to any one of the preceding claims integrated in an instrument panel (205) of a vehicle.

10. A method for installing a head up display system in a ventilation duct of a vehicle, said duct extending along a first axis, the head up display system comprising:
- an electronic image emitting unit configured to emit an optical image signal;
- a first optically reflective surface; and
- a concave optically reflecting surface;
wherein said method comprises the steps of:
- arranging (S402) the electronic image emitting unit such that said optical image signal travels through at least a portion of said ventilation duct;
- arranging (S404) said first optically reflective surface in said duct such that the optical image signal is received by said first optically reflective surface and is reflected at a first angle with respect to said first axis;
- arranging (S406) said concave optically reflecting surface to receive said optical image signal from said first optically reflective surface and to reflect the optical image signal towards an optical projection element such that an image representative of said optical image signal is visible through said optical projection element.

11. The method according to claim 10, wherein said electronic image emitting unit is arranged outside said duct and configured to emit said optical image signal into said duct.

12. The method according to claim 10, wherein said electronic image emitting unit is arranged inside said duct.

13. A vehicle (200) comprising the combined ventilation duct and head up display system according to any one of claims 1 to 9.
